Europäisches Patentamt

European Patent Office

Office européen des brevets

(19)

(11) Veröffentlichungsnummer : **0 291 053 B1**

(12)  # EUROPÄISCHE PATENTSCHRIFT

(45) Veröffentlichungstag der Patentschrift :
27.03.91 Patentblatt 91/13

(51) Int. Cl.$^5$ : **G11B 33/14, G11B 17/032**

(21) Anmeldenummer : 88107634.3

(22) Anmeldetag : 11.05.88

(54) Plattenstapelmodul mit Dehnungsausgleich zur Temperaturgangkompensation.

(30) Priorität : 14.05.87 DE 3716179

(43) Veröffentlichungstag der Anmeldung :
17.11.88 Patentblatt 88/46

(45) Bekanntmachung des Hinweises auf die
Patenterteilung :
27.03.91 Patentblatt 91/13

(84) Benannte Vertragsstaaten :
AT CH DE FR GB IT LI NL

(56) Entgegenhaltungen :
EP-A- 0 151 259

(56) Entgegenhaltungen :
EP-A- 0 169 352
US-A- 3 176 281
PATENT ABSTRACTS OF JAPAN, Band 10, Nr.
348 (P-519)[2404], 22. November 1986; & JP-
A-61 148 667 (FUJITSU LTD) 07-07-1986
PATENT ABSTRACTS OF JAPAN, Band 10, Nr.
111 (P-451)[2168], 25. April 1986; & JP-A-60 242
552 (FUJITSU K.K.) 02-12-1985

(73) Patentinhaber : Siemens Aktiengesellschaft
Wittelsbacherplatz 2
W-8000 München 2 (DE)

(72) Erfinder : Olbrich, Otto, Dipl.-Ing.
Birkenstrasse 39
W-8028 Taufkirchen (DE)

## Beschreibung

Die Erfindung bezieht sich auf ein Plattenstapelmodul gemäß dem Oberbegriff des Anspruches 1.

Mit der technischen Entwicklung von Magnetplattenspeichern, seien es Festplattenspeicher oder Wechselspeicher, als periphere Speicherbausteine in modernen Datenverarbeitungsanlagen geht fortwährend das vorrangige Bestreben einher, die Speicherkapazität von derartigen Massenspeichern zu erhöhen. Deshalb ist man einerseits um eine möglichst hohe Spur- und Bitdichte pro Plattenfläche bemüht, andererseits setzt man alles daran, bei einem vorgegebenen Einbauraum des Magnetplattenspeichers eine möglichst große Anzahl von Datenplatten unterzubringen. Beide Alternativen, das Speichervermögen von solchen peripheren Bausteinen zu vergrößern, stellen jedoch bestimmte notwendige Anforderungen an den konstruktiven Aufbau eines Magnetplattenspeichers.

In den europäischen Patentveröffentlichungen 0 151 260, 0 151 259, 0 151 258 und 0 151 256 werden einschlägige Lösungen für den konstruktiven Aufbau von Magnetplattenspeichern aufgezeigt, bei denen eine Innenmotorkonzeption verwirklicht ist. Dabei ist ein Antriebsmotor in eine Aufnahmeeinrichtung für die Datenplatten integriert, die mit diesen zusammen einen Plattenstapelmodul bildet. Auf diese Weise kann eine Mehrzahl von Datenplatten in dichter Packung in einem Gehäuse untergebracht werden. Mit dem gemeinsamen Antrieb werden alle Datenplatten gleichzeitig in Drehbewegung versetzt.

Die Tatsache, daß ein solcher in die Aufnahmeeinrichtung integrierter, als Innenmotor bezeichneter Antrieb magnetische Streufelder erzeugt, ist für den Speichervorgang der Daten auf den Platten nicht unproblematisch. Demzufolge ist es in diesem Fall für einen einwandfreien Betrieb wesentlich, die Datenplatten von der als Nabe ausgebildeten Aufnahmeeinrichtung magnetisch zu entkoppeln. Dazu werden die Datenplatten aus Aluminium und die Nabe aus Weicheisen hergestellt.

Bei dieser bekannten Lösung ist allerdings eine gewisse Temperaturempfindlichkeit vorhanden. Infolge von auftretenden Temperaturschwankungen beim Transport, aber auch beim Betrieb eines Magnetplattenspeichers, treten aufgrund der sich etwa um den Faktor 2 unterscheidenden Wärmeausdehnungskoeffizienten von Aluminium und Eisen Materialspannungen auf. Es ist nicht auszuschließen, daß diese Materialspannungen eine Größenordnung annehmen, die letztlich ein Rutschen der Datenplatten zur Folge hat.

Bei diesem Rutschen kommt dem Coulomb'schen Reibungskoeffizienten erhebliche Bedeutung zu. Weil die Reibungskoeffizienten stark streuen, tritt ein Rutschen nur in Ausnahmefällen koaxial zur Rotationsachse der Datenplatten auf. Die Datenplatten weisen herstellungsbedingt oft eine gewisse, noch tolerierbare Exzentrizität auf. Zu dieser addiert sich infolge der temperaturabhängigen Materialspannungen eine weitere, durch die Streuung des Coulomb'schen Reibungskoeffizienten hervorgerufene Exzentrizität. Diese sich im Laufe der Betriebszeit mit hoher Wahrscheinlichkeit wieder verändernde Exzentrizität der Datenplatten liegt in einer Größenordnung, die bei Magnetplattenspeichern mit einer hohen Spurdichte zu Fehlern beim Auslesen der auf der Platte gespeicherten Daten führen kann.

Wenn bei heute üblichen Spurdichten unter den beschriebenen Betriebsbedingungen die Exzentrizität der Datenplatten infolge von Temperaturschwankungen eine Größenordnung von 10 µm erreicht, kann selbst eine bei heutigen Plattenspeichern hoher Kapazität übliche Servo-Regelung für die Spurfolge der Abtastköpfe nicht mehr mit hinreichender Präzision folgen.

Bei einer anderen Gruppe von herkömmlichen Magnetplattenspeichern ist der Antriebsmotor als Außenmotor ausgebildet, d.h. die Datenplatten werden von einem extern an dem Gehäuse des Magnetplattenspeichers angeflanschten Motor angetrieben. Bei diesem Aufbau eines Plattenspeichers können sowohl die Nabe als auch die Datenplatten aus Aluminium hergestellt werden. Den Vorteilen, einerseits die magnetischen Streufelder des Motors nicht zusätzlich abzuschirmen und andererseits keine temperaturabhängig auftretenden Materialspannungen berücksichtigen zu müssen, steht der Nachteil einer geringeren Speicherkapazität bei vorgegebenem Einbauraum für den Plattenspeicher gegenüber.

Aus der US-Patentschrift 4,519,010 ist weiterhin ein Magnetplattenspeicher mit Innenmotor bekannt, bei dem die Nabe und die Datenplatten ebenfalls aus einem identischen Material hergestellt sind. Dadurch kommt es auch hier an den Anlageflächen der Datenplatten auf der Nabe aufgrund der identischen Wärmeausdehnungskoeffizienten zu keinen thermischen Materialspannungen. Jedoch ist in diesem Fall ein magnetisches Schutzschild für die vom Innenmotor herrührenden magnetischen Streufelder erforderlich, damit die Datenplatten magnetisch entkoppelt werden. Ein Teil dieses Schutzschildes besteht aus einem magnetischen Rückflußring aus magnetisch leitfähigem Material, vorzugsweise Weicheisen, der den Permanentmagneten des Antriebsmotors umgibt. Durch weitere Schutzringe wird letztlich der gesamte Innenmotor von den Datenplatten magnetisch abgeschirmt.

Bei dieser Lösung ist ein unverhältnismäßig großer konstruktiver Aufwand und großer Platzbedarf vorhanden, um die magnetische Abschirmung der Datenplatten sicherzustellen.

Alternativ dazu zeigt die DE-A 35 15 059 eine Möglichkeit auf, die bei der Innenmotorkonzeption auftretende mechanische und thermische Spannung beim Transport und im Betrieb des Plattenspeichers zu kompensieren. Hierbei soll die relative Verschiebung einer aus Aluminium hergestellten Datenplatte gegenüber einer Eisennabe durch den Einbau einer Klemmeinrichtung vermieden werden, die flexibel gestaltet ist, um konstante Reibungsverhältnisse zu erzielen. Es ist eine becherförmig, leicht federnd ausgebildete Klemme vorgesehen, die mittels eines Gewindebolzens mit der Eisennabe verbunden ist und die Datenplatte mechanisch festklemmt. Dadurch soll erreicht werden, daß die Coulomb'sche Reibung im kritischen Auflagebereich zwischen der Nabe und der Datenplatte größer ist als zwischen der Datenplatte und der Klemme. Deswegen soll die Klemmeinrichtung bei auftretenden mechanischen und thermischen Spannungen nachgeben, ohne daß eine radiale Verschiebung der Datenplatte eintritt. Dem beschriebenen Lösungsweg steht jedoch entgegen, daß bei häufigen Temperaturwechseln die zu fordernde Konstanz der Reibungsverhältnisse nicht ohne weiteres sichergestellt ist. Hinzu kommt, daß die gestellten konstruktiven Anforderungen an einen Magnetplattenspeicher, der eingangs erwähnten Art, von einer derartigen Klemmeinrichtung nur unzureichend gelöst werden.

Der vorliegenden Erfindung liegt daher die Aufgabe zugrunde, einen Plattenstapelmodul gemäß dem Oberbegriff des Patentanspruches 1 zu schaffen, bei dem die Auflagestellen der Datenplatten an einer in einem Plattenspeichergehäuse drehbar gelagerten Nabe radial so gestaltet sind, daß sie sich aufgrund von Mikrobewegungen bei Temperaturänderungen elastisch verformen. Dabei ist die Steifigkeit der Auflagestellen so abzustimmen, daß die axiale Spannkraft auch bei maximalen Temperaturhüben noch ausreicht, um mit Sicherheit ein Rutschen der einzelnen Datenplatten zu vermeiden.

Diese Aufgabe wird gemäß der vorliegenden Erfindung bei einem Plattenstapelmodul der eingangs genannten Art durch die im Kennzeichen des Patentanspruches 1 beschriebenen Merkmalen gelöst. Diese Lösung zeigt sich insbesondere dadurch aus, daß anstelle einer Klemmeinrichtung zum Festlegen der Datenplatten an einer Nabe eine Aufnahmeeinrichtung vorgesehen ist, die zur Temperaturgangkompensation einen Dehnungsausgleich bewerkstelligt. Dazu umfaßt diese Aufnahmeeinrichtung den an der Nabe radial vorspringenden Flansch, den Spannring, den Spannteller und die Ringscheibe. Letztere wird zusammen mit den Datenplatten und dazwischen angeordneten Abstandsringen auf die Nabe aufgeschoben und liegt dann an dem Flansch an. Mittels des Spannringes und Spanntellers wird das Plattenpaket kraftschlüssig verspannt. Die Aufnahmeeinrichtung legt die Datenplatten nicht nur im Montagezustand sowohl in axialer als auch radialer Richtung fest, sondern kompensiert auch die durch Mikrobewegungen bei Temperaturänderungen hervorgerufenen Kräfte im Betriebszustand, da sich der Spannring und der Flansch elastisch, d.h. reversibel verformen. Weiterhin gewährleistet die Aufnahmeeinrichtung im montierten Zustand aufgrund des axialen Kraftschlusses direkt oberhalb der Mantellinie der Nabe nur ein geringes Verbiegen des elastisch ausgebildeten Flansches. Die dabei auf den gesamten Flansch angreifende Vorspannkraft wird mittels einer Ringscheibe so geführt, daß eine möglichst große Flächenpressung an den Flansch erfolgt.

Die infolge der thermischen Materialspannungen hervorgerufenen Kräfte in axialer, aber auch in radialer Richtung lassen sich so kompensieren. Mit der Erfindung ist weiterhin sichergestellt, daß einerseits die magnetischen Streufelder des Antriebsmotors die Datenplatten nicht negativ beeinflussen und daß andererseits eine ständige sich verändernde Exzentrizität der Datenplatten während des Plattenspeicherbetriebes vermieden wird. Dies erlaubt, im Gegensatz zu den bekannten Lösungsvorschlägen eine einfache magnetische Abschirmung, wodurch bei vorgegebenem Einbauraum für den Magnetplattenspeicher durch die vorliegende Erfindung keine Einbußen an Speicherkapazität hingenommen werden müssen.

Weitere Einzelheiten und Vorteile ergeben sich aus der nachfolgenden Beschreibung eines Ausführungsbeispieles anhand der Zeichnungen. Dabei zeigt:

FIG 1 einen Schnitt durch ein Laufwerk eines Magnetplattenspeichers mit einem umlaufenden Plattenstapelmodul im Detail, während die übrigen Laufwerkselemente nur insoweit dargestellt sind, als für das Verständnis erforderlich erscheint,

FIG 2 in einer Explosionsdarstellung eine Nabe des Plattenstapelmoduls mit einem zu der Nabenoberfläche abgewinkelt angeordneten Flansch sowie einen Spannring und einen Spannteller,

FIG 3 einen Schnitt durch ein Segment des Flansches längs der Schnittlinie III-III mit einem eingezeichneten Kraftvektor $F_a$,

FIG 4 ein einzelnes Flanschsegment in Draufsicht,

FIG 5 ein einzelnes Flanschsegment in einer Frontansicht mit einem eingezeichneten Kraftvektor $F_r$,

FIG 6 eine Ringscheibe, die zur Erhöhung der Flächenpressung zwischen Nabenflansch und Datenplatten eingesetzt wird, und

FIG 7 die Ringscheibe zusammen mit einem einzelnen Flanschsegment.

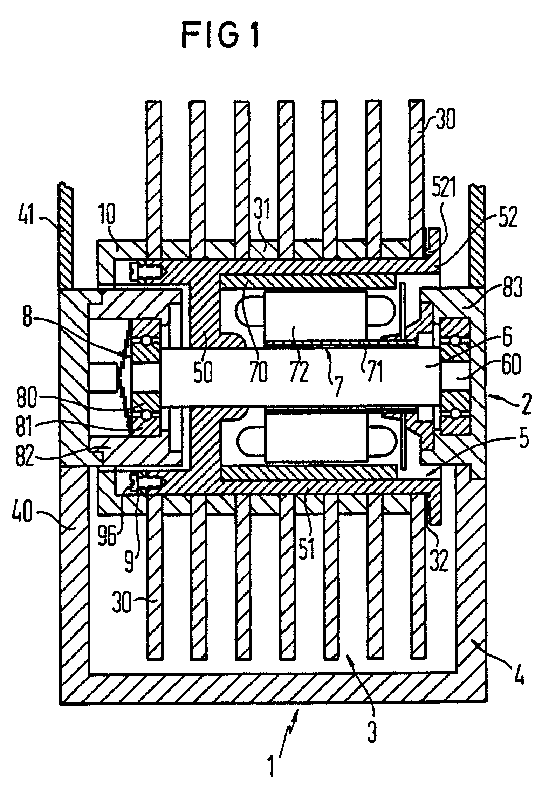

Der in FIG 1 dargestellte Schnitt durch einen Magnetplattenspeicher 1 illustriert vereinfacht den Aufbau und die Lagerung eines rotationssymmetrischen Plattenstapelmoduls 2 einschließlich eines umlaufenden Plattenpaketes 3. Der Plattenstapelmodul 2 läuft in einem Gehäuse 4 um, das aus einer Tragschale 40 und einem Gehäusedeckel 41 besteht. Der Plattenstapelmodul 2 setzt sich aus einer Nabe 5, einer Spindel 6 und einem Antriebsmotor 7 zusammen. Zum beidseitigen Lagern des Plattenstapelmoduls 2 sind Wälzlager 8 vorgesehen, deren Innenringe 80 Spindelzapfen 60 der Spindel 6 formschlüssig umschließen. Auf Außenringen 81 der Wälzlager 8 sind Lagerbuchsen 82 bzw. 83 festgelegt, die in die Tragschale 40 so eingebaut sind, daß die Kugellager 8 in axialer Richtung spielfrei verspannt sind. Axial ist die Nabe 5 auf der umlaufenden Spindel 6 durch einen Mittelsteg mit Festsitz festgelegt. Weiterhin ist ein als Innenmotor ausgebildeter Antriebsmotor 7 vorgesehen, dessen wicklungsloser, aus einem Permanentmagneten bestehender Rotor 70 auf der Innenfläche eines Zylinders 51 der Nabe 5 festgelegt ist und dessen Stator 71 eine Statorwicklung 72 trägt.

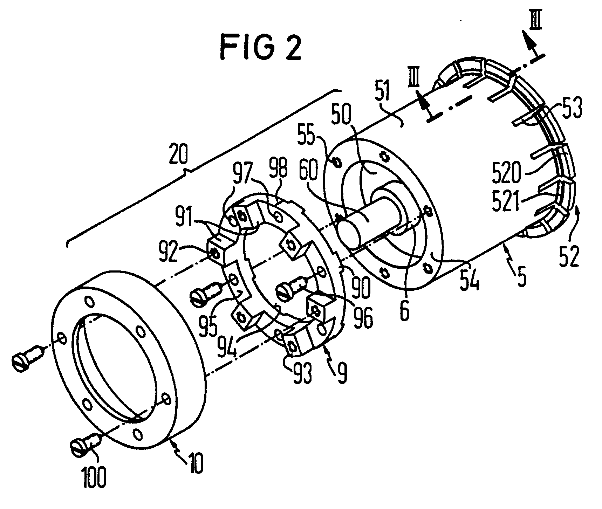

Aufgrund der elektromagnetischen Antriebskraft des Motors 7 wird die Nabe 5 und damit auch die auf den Nabenkörper gegen einen Flansch 52 der Nabe aufgeschobenen und zu einem Plattenstapelmodul zusammengefaßten Einzelteile, wie Datenplatten 30, Abstandsringe 31 zwischen den Datenplatten und eine am Flansch 52 anliegende Ringscheibe 32 in Drehbewegung versetzt. Die axiale Festlegung der Teile erfolgt im Montagezustand durch den Kraftschluß zwischen einem Spannteller 10 und dem Flansch 52 über die dazwischen angeordneten Datenplatten 30, die Abstandsringe 31 sowie die Ringscheibe 32 bei einer Vorspannkraft, die sich aus dem Anzugsmoment von Befestigungselementen 100 (Fig 2) ergibt. Während der Flansch 52 selbst direkt ein Teil der Nabe 5 bildet, ist der Spannteller 10 über einen Spannring 9 mit dem Nabenkörper verbunden und stellt die Aufnahmeeinrichtung 20 (Fig 2) für das Plattenpaket 3 dar. Die Funktion des Spannringes 9, des Flansches 52, der Ringscheibe 32 und des Spanntellers 10 wird im folgenden näher erläutert.

Die FIG 2 zeigt in einer perspektivisch-axiometrischen Explosionsdarstellung die Nabe 5 mit dem als Anlagefläche für das Plattenpaket 3 vorgesehenen Flansch 52, sowie den Spannring 9 und den Spannteller 10. Letzterer bildet im montierten Zustand zusammen mit dem Flansch 52 die beiden Anlageflächen, zwischen denen das Plattenpaket 3 verspannt wird. Wie in FIG 2 dargestellt, ist der Flansch 52 aus einer Mehrzahl von Flanschsegmenten 520 zusammengesetzt, die an einer Stirnseite der Nabe 5 von dem Zylinder 51 radial vorspringen und mit dieser Stirnseite der Nabe 5 bündig abschließen. Sie sind jeweils durch einen der axialen Schlitze 53 voneinander getrennt, die sich auf der Stirnseite der Nabe, von wo der Einbau des Antriebsmotors 7 erfolgt, ein Stück axial in den Zylinder 51 hinein erstrecken. Vorzugsweise enden die Schlitze 53 noch vor dem Einbauplatz des dem Rotor 70 des Antriebsmotors entsprechenden Permanentmagneten 70.

Die Stirnfläche 54 auf der gegenüberliegenden, dem Mittelsteg 50 näherliegenden Stirnseite weist eine Mehrzahl von radial symmetrisch angeordneten Gewindebohrungen 55 auf. An dieser Stirnseite wird ein Spannring 9 aus Aluminium mit Verbindungselementen 96, im beschriebenen Ausführungsbeispiel sind dies Schlitzkopfschrauben, konzentrisch zur Spindel 6 angeflanscht. Der äußere Durchmesser des Spannringes 9 entspricht dem Außendurchmesser des Zylinders 51, der innere Spannringdurchmesser sollte so bemessen sein, daß die Köpfe der Verbindungselemente 96 eine genügend große Auflagefläche besitzen.

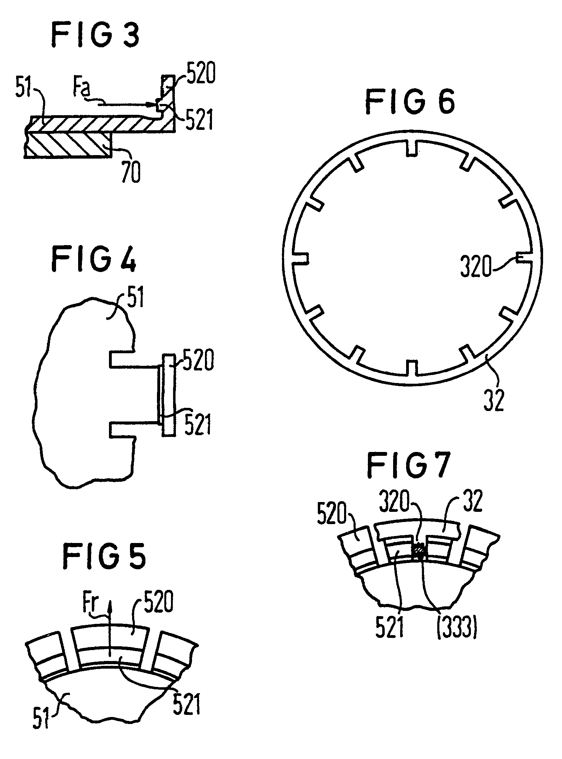

Die dem Mittelsteg 50 zugewandte Seite des Spannringes 9 bildet seine Grundfläche 94. Aus dieser ragen in axialer Richtung flache Auflagestücke 90 heraus, die jeweils eine der Durchtrittsöffnungen 97 für die Verbindungselemente 96. Die Auflagefläche der Auflagestücke ist möglichst klein gehalten und nach unten durch den Durchmesser der Durchtrittsöffnung begrenzt. Analog dazu stehen auf der Deckfläche 95 des Spannringes Dome 91. Auch diese sind radialsymmetrisch angeordnet, aber bezüglich der Auflagestücke 90 mittig versetzt. Die axiale Ausdehnung der Dome 91 ist so bemessen, daß der Spannteller 10, der wie die Datenplatten 30 und die Abstandsringe 31 aus Aluminium hergestellt ist, auf den Außenflächen 93 der Dome 91 planparallel aufliegt und mit Hilfe von Befestigungselementen 100 in Gewindebohrungen 92 verankert werden kann, die in die Dome 91 eingelassen sind. Der Spannteller 10 ist becherförmig ausgebildet und im montierten Zustand über den Spannring 9 gestülpt. Er springt in axialer Richtung soweit vor, daß er gegen die zugewandte Datenplatte 30 drückt und so die einzelnen Datenplatten 30, die Abstandsringe 31 und die Ringscheibe 32 auf der Nabe 5 axial festlegt. Durch das Anzugsmoment der Befestigungsschrauben 100 und der daraus resultierenden Vorspannkraft wirkt auf ein einzelnes Flanschsegment 520 eine Axialkraft $F_a$ (Fig 3). Die Flanschsegmente 520 sind elastisch verformbar gestaltet, so daß sie sich je nach Lage des Kraftangriffspunktes unterschiedlich verbiegen.

Es wird jedoch angestrebt, solche Verformungen möglichst gering zu halten. Aus diesem Grunde weist, wie die Schnittdarstellung durch ein Segment in FIG 3 zeigt, jedes Flanschsegment 520 eine aus der den Datenplatten zugewandten Innfläche vorspringende Stufe 521 auf. Die Stufe 521 erstreckt sich dabei, wie die Darstellungen jeweils eines einzelnen Flanschsegmentes in FIG 4 bzw. 5 zeigen, über die gesamte radiale Breite des Flanschsegmentes direkt oberhalb der Mantellinie des Zylinders 51 der Nabe 5. Dadurch ist gewährleistet, daß die Axialkraft $F_a$ auf die Flanschsegmente nur ein geringes Biegemoment ausübt und so die elastische Verformung begrenzt ist.

Im Betriebszustand des Magnetplattenspeichers 1 überträgt sich wie bereits eingangs erwähnt, die dissipative Energie des Antriebsmotors auf die ihn umgebende Nabe. Dadurch treten im Nabenkörper und den Datenplatten bei voneinander abweichenden Wärmeausdehnungskoeffizienten von Eisen und Aluminium unterschiedliche Materialdehnungen auf, die sowohl in axialer als auch radialer Richtung wirksam werden.

Nun ist die thermische Ausdehnung der Aluminiumteile nahezu doppelt so groß wie die Ausdehnung der Eisenteile. Ohne Gegenmaßnahmen führt dies bei vorgegebenen Temperaturhüben insbesondere wegen der Ausdehnung in radialer Richtung, zu den eingangs erwähnten Problemen im Zusammenhang mit dem Auslesen der auf den einzelnen Datenplatten gespeicherten Information. Im vorliegenden Fall soll dies durch einen Dehnungsausgleich verhindert werden. Für den radialen Dehnungsausgleich stehen einerseits die Bereiche des Spannringes 9 zwischen den Auflagestükken 90 und den Domen 91 und andererseits Kontaktflächenbereiche 333 (FIG 7) in den einzelnen Flanschsegmenten 520 zur Verfügung. Diese Bereiche müssen so bemessen bzw. ausgestaltet sein, daß dort eine elastische Verformung auftritt, die die unterschiedlichen Materialdehnungen kompensiert.

Die Funktion des Spannringes 9 zum radialen Dehnungsausgleich sei wie folgt erläutert.

Infolge der unterschiedlichen Wärmedehnung der Datenplatten 30, der Abstandsringe 31 und des Spanntellers 10 einerseits und der Nabe 5 andererseits erfährt der Spannring 9 an den Auflageflächen 90 Kontaktflächen zur Nabe im Bereich der Auflagestücke 90 und zum Spannteller 10 im Bereich der Anlageflächen 93 der Dome 91 bei Temperaturänderungen unterschiedliche Durchmesseränderungen. Dieser Durchmesserunterschied gleicht sich innerhalb des Spannringes 9 dadurch aus, daß im wesentlichen die Bereiche zwischen den Auflageflächen 90 und den Domen 91 tordieren.

Die beschriebene elastische Verformung des Spannringes 9 kann dann erfolgen, wenn die an den jeweiligen Flächen 93 erforderliche radiale Kraft kleiner oder höchstens gleich der übertragbaren Reibungskraft zwischen dem Spannteller 10 und der zugewandten Datenplatte 30 ist. Die Reibungskraft $F_r$ ist dabei nach dem Coulomb'schen Reibungsgesetz proportional der Axialkraft $F_a$.

Für den radialen Dehnungsausgleich auf der Flanschseite der Nabe ist es zweckmäßig, eine Ringscheibe 32 zur Erhöhung der Flächenpressung zwischen erster Datenplatte und den jeweiligen Flanschsegment zu legen. Diese in FIG 6 gezeigte Ringscheibe weist in radial symmetrischer Anordnung mehrere nach innen zum Mittelpunkt gerichtete Nasen 320 auf. Der durch diese Nasen gebildete Innendurchmesser ist dabei nur geringfügig größer als der Außendurchmesser des Zylinders 51, während der Außendurchmesser der Ringscheibe in etwa gleich der radialen Ausdehnung der Flanschsegmente 520 ist. Die Anzahl dieser Nasen entspricht dabei der Anzahl der Flanschsegmente 520, so daß – wie in FIG 7 gezeigt – pro Flanschsegment eine Nase der Ringscheibe 32 auf der abgesetzten Stufe 521 aufliegt. Die hierdurch erreichte kraftschlüssige Punktauflage im Kontaktflächenbereich 333 gewährleistet nunmehr, daß sich das Flanschsegment 520 bei einem in radialer Richtung aufgrund von Temperaturschwankungen auftretenden Materialdehnung aufgrund der sich gemäß dem Coulomb'schen Gesetz aufbauenden Reibungskraft $F_r$ elastisch soweit verbiegt, daß dieser Dehnungsunterschied aufgefangen wird.

Damit dieser radiale Dehnungsausgleich ungehindert funktionieren kann, muß zwischen der Bohrung den Innendurchmesser der Datenplatten 30 und der Abstandsringe 31 einerseits und den Außendurchmessern der Nabe 5 und des Spannringes 9 andererseits radial mindestens soviel Spiel sein, um den Unterschied der radialen Dehnungen von Nabe 5 und aufgeschobenen Elementen im gesamten zugelassenen Temperaturbereich auffangen zu können.

Neben der auftretenden radialen Materialdehnung infolge von Temperaturschwankungen im Betriebszustand des Magnetplattenspeichers machen sich, wie bereits angemerkt, auch Dehnungen des Materiales in axialer Richtung bemerkbar. Diese sind aufgrund der elastischen Verspannung von den Datenplatten 30 auf der Nabe 5 von vornherein weniger kritisch als die radialen Dehnungen. Schließlich ist darauf hinzuweisen, daß durch die Gestaltung der Nabe 5 die Schwingungssteifigkeit des gesamten Plattenstapelmoduls nicht beeinträchtigt wird. Das ist auch darauf zurückzuführen, daß alle Flanschsegmente 520 über die erste Datenplatte und alle Dome 91 über den Spannteller 10 miteinander verbunden sind und damit zur Erhöhung der Steifigkeit beitragen.

Im vorstehenden beschriebenen Ausführungsbeispiel ist eine konstruktive Ausgestaltung eines Plattenstapelmoduls beschrieben, bei der die Anlageflächen für die Datenplatten so ausgebildet sind, daß sich diese bei Temperaturänderungen innerhalb des Magnetplattenspeichers ihrem Wärmeausdehnungskoeffizienten entsprechend ausdehnen können, ohne daß hiermit die Funktion des Magnetplattenspeichers beeinträchtigt wird. Es lassen sich im Rahmen der vorliegenden Lösung durchaus weitere Ausführungsformen vorstellen, wie z.B. konstruktive Abwandlungen der Nabe oder der Spann- und Verformungselemente, und aber auch eine andere Materialauswahl der einzelnen Teile.

**Ansprüche**

1. Plattenstapelmodul (2) eines Magnetplattenspeichers (1) bei dem durch Abstandsringe (31) voneinander getrennte Datenplatten (30) auf einer in einem Gehäuse (4) drehbar angeordneten Nabe (5) gegen einen in radialer Richtung vorspringenden Nabenflansch (52) aufgeschoben und mittels eines Spanntellers (10) dazu kraftschlüssig verspannt sind, **dadurch gekennzeichnet,** daß zur Temperaturgangkompensation durch Dehnungsansgleich, der Flansch (52) der Nabe (5) elastisch verformbar ausgebildet ist und daß als Aufnahme für den Spannteller (10) auf der dem Flansch (52) abgekehrten Stirnfläche (54) der Nabe ein reversibel verformbarer Spannring (9) festgelegt ist.

2. Plattenstapelmodul nach Anspruch 1, **dadurch gekennzeichnet,** daß der elastische Flansch (52) sich aus einer Mehrzahl von einzelnen, voneinander durch Schlitze (53) getrennten und symmetrisch angeordneten Flanschsegmenten (520) zusammensetzt.

3. Plattenstapelmodul nach Anspruch 2, **dadurch gekennzeichnet,** daß sich die Schlitze (53) in radialer Richtung über die Breite des Flansches (52) hinweg und in axialer Richtung bis in den Zylinder (51) der Nabe (5) hineinerstrecken.

4. Plattenstapelmodul nach Anspruch 2 oder 3, **dadurch gekennzeichnet,** daß die Flanschsegmente jeweils eine Stufe (521) aufweisen, die aus der den Datenplatten (30) zugewandten Innenfläche der Flanschsegmente (520) vorspringend, konzentrisch zu der Mantellinie des Zylinders (51) jedoch mit geringen Abstand dazu verläuft.

5. Plattenstapelmodul nach einem der Ansprüche 1 bis 4, **gekennzeichnet durch** eine Ringscheibe (32), die zwischen dem Flansch (52) der Nabe (5) und der diesem zugewandten Datenplatte (30) angeordnet und derart ausgestaltet ist, daß sich zum Erhöhen der Flächenpressung zwischen dem Flansch (52) und der ihm zugewandten Datenplatte (30) und ein in bezug auf die Innenflächen der Flanschsegmente (520) reduzierter Kontaktflächenbereich (333) ergibt.

6. Plattenstapelmodul nach Anspruch 5, **dadurch gekennzeichnet,** daß die Ringscheibe (32) eine der Anzahl der Flanschsegmente (520) entsprechende Mehrzahl von in radialer Richtung nach innen vorspringenden Nasen (320) in symmetrischer Anordnung aufweist.

7. Plattenstapelmodul nach einem der Ansprüche 1 bis 6, **dadurch gekennzeichnet,** daß der Spannring (9) eine Deckfläche (95) und eine Grundfläche (94) aufweist, auf deren Umfang jeweils in axialer Richtung vorspringende, voneinander abgesetzte Erhebungen (90 bzw. 91) angeordnet sind, wobei die Erhebungen (90) auf der Grundfläche (94) gegenüber den Erhebungen (91) auf der Deckfläche (95) zueinander mittig versetzt sind.

8. Plattenstapelmodul nach Anspruch 7, **dadurch gekennzeichnet,** daß in die Erhebungen (90) auf der Grundfläche (94) des Spannringes (9) jeweils eine axial gerichtete Durchtrittsöffnung (97) eingelassen ist, daß in die Stirnfläche (54) der Nabe (5) diesen Durchtrittsöffnungen zugeordnete Gewindebohrungen (55) eingelassen sind und daß Verbindungselemente (96) vorgesehen sind, die zum formschlüssigen Befestigen des Spannringes (9) an der Nabe (5) durch die Durchtrittsöffnungen hindurchgreifend in die Gewindebohrungen eingeschraubt sind.

9. Plattenstapelmodul nach Anspruch 7 oder 8, **dadurch gekennzeichnet,** daß die Erhebungen (91) auf der Deckfläche (95) jeweils eine axial gerichtete Gewindebohrung (92) aufweisen, und daß Befestigungselemente (100) vorgesehen sind, die zum axialen Festlegen des Spanntellers (10), der Datenplatten (30), der Abstandsringe (31) und der Ringscheibe (32) auf der Nabe (5) in die Gewindebohrungen (92) eingeschraubt sind.

**Claims**

1. Disc stacking module (2) of a magnetic disc storage (1) in which data discs (30) separated from one another by spacing rings (31) are pushed on a hub (5) rotatably arranged in a housing (4) are pushed up against a hub flange (52) projecting in the radial direction and non-positively prestressed in relation thereto by means of a tension plate (10), characterized in that for the purpose of compensating temperature variations by means of compensation of the dilatation the flange (52) of the hub (5) is constructed to be elastically deformable and in that a reversibly deformable tension ring (9) is fixed on the end face (54) of the hub facing away from the flange (52) as receptacle for the tension plate (10).

2. Disc stacking module according to Claim 1, characterized in that the elastic flange (52) is composed of a multiplicity of individual flange segments (520) separated from one another by slots (53) and arranged symmetrically.

3. Disc stacking module according to Claim 2, characterized in that the slots (53) extend in a radial direction beyond the width of the flange (52) and in an axial direction as far as into the cylinder (51) of the hub (5).

4. Disc stacking module according to Claim 2 or 3, characterized in that the flange segments each have a step (521) which protruding out from the inner face of the flange segments (520) facing the data discs (30), extends concentrically with respect to the generating line of the cylinder (51) but at a slight distance therefrom.

5. Disc stacking module according to one of Claims 1 to 4, characterized by an annular washer (32) which is arranged between the flange (52) of the hub (5) and the data disc (30) facing the latter and designed in such a way that for the purpose of increasing the surface pressure between the flange (52) and the data disc facing it (30) a contact face area (333) which is reduced in relation to the inner faces of the flange segments (520) is produced.

6. Disc stacking module according to Claim 5, characterized in that the annular washer (32) has a multiplicity of projections (320) protruding inwards in a radial direction in symmetrical arrangement, said multiplicity corresponding to the number of flange segments (520).

7. Disc stacking module according to one of Claims 1 to 6, characterized in that the tension ring (9) has a cover face (95) and a base face (94) on the circumference of which in each case elevations (90 or 91) protruding in an axial direction and offset from one another are arranged, the elevations (90) on the base face (94) being centrally offset in relation to one another with respect to the elevations (91) on the cover face (95).

8. Disc stacking module according to Claim 7, characterized in that in each case an axially directed through hole (97) is made in the elevations (90) on the base face (94) of the tension ring (9), in that threaded bores (55) assigned to said through holes are made in the end face (54) of the hub (5) and in that connecting elements (96) are provided which for the purpose of positively securing the tension ring (9) to the hub (5) are screwed, engaging through the through holes, into the threaded bores.

9. Disc stacking module according to Claim 7 or 8, characterized in that the elevations (91) on the cover face (95) have in each case one axially directed threaded bore (92) and in that securing elements (100) are provided which for the purpose of axially fixing the tension plate (10), the data discs (30), the spacing rings (31) and the annular washer (32) on the hub (5) are screwed into the threaded bores (92).

## Revendications

1. Module à pile de disques (2) d'une mémoire à disques magnétiques (1), dans lequel des disques de données (30) qui sont séparés entre eux par des bagues-entretoises (31), sont enfilés sur un moyeu (5) monté à rotation dans un boîtier (4) pour porter contre un flasque de moyeu (52) saillant en direction radiale, et sont serrés à transmission de force à l'aide d'un plateau de serrage (10), caractérisé par le fait qu'en vue de la compensation de la variation de la température par compensation de la dilatation, le flasque (52) du moyeu (5) est réalisé de manière à se déformer élastiquement et que pour recevoir le plateau de serrage (10), un anneau de serrage (9) à déformation réversible est fixé à la surface frontale (54) du moyeu, qui est éloignée du flasque (52).

2. Module à pile de disques selon la revendication 1, caractérisé par le fait que le flasque élastique (52) est constitué par une pluralité de segments de flasques (520) individuels, qui sont séparés entre eux par des fentes (53) et qui sont agencés de façon symétrique.

3. Module à pile de disques selon la revendication 2, caractérisé par le fait que les fentes (53) s'étendent en direction radiale, sur la largeur du flasque (52) et s'étendent, en direction axiale jusque dans le cylindre (51) du moyeu (5).

4. Module à pile de disques selon la revendication 2 ou 3, caractérisé par le fait que les segments de flasques comportent chacun un gradin (521) qui est en saillie sur la surface intérieure des segments de flasques (520), voisine des disques de données (30), en position concentrique par rapport à la génératrice du cylindre (51) mais à une faible distance par rapport à ce dernier.

5. Module à pile de disques selon l'une des revendications 1 à 4, caractérisé par un disque annulaire (32) qui est disposé entre le flasque (52) du moyeu (5) et le disque de données (30) qui est voisin dudit flasque, le disque annulaire étant constitué de telle façon qu'en vue de l'accroissement de la pression superficielle, il en résulte entre le flasque (52) et le disque de données (30) qui lui est voisin et, par rapport aux surfaces intérieures des segments de flasques (520), il en résulte une zone de surface de contact (333) réduite.

6. Module à pile de disques selon la revendication 5, caractérisé par le fait que le disque annulaire (32) comporte, avec un agencement symétrique, une pluralité de becs (320) qui sont en saillie vers l'intérieur, en direction radiale, et qui correspondent au nombre de segments de flasques (520).

7. Module à pile de disques selon l'une des revendications 1 à 6, caractérisé par le fait que l'anneau de serrage (9) comporte une surface de couverture (95) et une surface de base (94) sur la périphérie de laquelle sont prévus respectivement des parties saillantes en direction axiale (90, 91) décalées entre elles, lesdites parties saillantes (90) étant décalées sur la surface de base (94) par rapport aux parties saillantes (91) de la surface de couverture (95), le décalage mutuel étant de nature médiane.

8. Module à pile de disques selon la revendication 7, caractérisé par le fait que dans les parties saillantes (90) de la surface de base (94) de l'anneau de serrage (9) est ménagée, respectivement, une ouverture de passage axial (97), que dans la surface frontale (54) du moyeu (5) sont ménagés des perçages filetés (55) qui sont associés à ces ouvertures de passage et que des éléments de liaison (96) sont prévus, qui, pour la fixation par formes complémentaires de l'anneau de serrage (9) au moyeu (5), sont vissés dans les perçages filetés, en passant par les ouvertures de passage.

9. Module à pile de disques selon la revendication 7 ou 8, caractérisé par le fait que les parties saillantes (91) de la surface de couverture (95) comportent chacune un perçage fileté (92) dirigé axialement, et que des éléments de fixation (100) sont prévus qui, pour fixer axialement le plateau de serrage (10) des disques de données (30), des bagues-entretoises (31) et du disque annulaire (32) sur le moyeu (5), sont vissés dans les perçages filetés (92).

# FIG 1

# FIG 2

FIG 3

FIG 6

FIG 4

FIG 5

FIG 7